# EUROPEAN PATENT APPLICATION

(11) **EP 1 079 616 A2**
(43) Date of publication of application: **28.02.2001**
(21) Application number: 00118518.0
(22) Date of filing: 25.08.2000
(51) Int. Cl.: H04N 5/445

(54) **Information receiving system for television receiver**

(30) Priority: 27.08.1999 JP 24099399
(71) Applicant: Pioneer Corporation, Tokyo 153-0063 (JP)
(72) Inventor: Nishitsuka, Mitsuru, Ohmori Nishi, Ohta-ku, Tokyo 143-0015 (JP); Uee, Nobuo, Ohmori Nishi, Ohta-ku, Tokyo 143-0015 (JP); Miura, Takeshi, Ohmori Nishi, Ohta-ku, Tokyo 143-0015 (JP)
(74) Representative: Grünecker, Kinkeldey, Stockmair & Schwanhäusser Anwaltssozietät

(57) **Abstract**

An information receiving system for a television receiver for receiving a television broadcasting signal includes a terminal device and a PDA 2B for inputting any information to the terminal device 2. The terminal device includes a memory M1 for storing information inputted from the PDA 2B, a micro-controller T10 for reading the information stored previously in the memory M1 when the terminal device is set at a dedicated channel which has been set previously, a video signal output circuit M2 for creating a video signal from the information read from the memory M1, and a switch circuit T15 for sending the vide signal from the video signal output circuit M2 to a television receiver 2A in place of a television broadcasting signal when the terminal is set at the dedicated channel. In this configuration, the information which is inputted optionally can be processed in the information receiving system for the television receiver.

## Description

### BACKGROUND OF THE INVENTION

### 1. Field of the Invention

The present invention relates to an information receiving system for a television receiver, and more particularly to an information receiving system capable of processing information optionally inputted by a user.

### 2. Description of the Related Art

In recent years, a program broadcasting system such as a cable television (hereinafter referred to as "CATV") or satellite broadcasting has become widespread.

The CATV broadcasting system refers to a broadcasting system in which a broadcasting center transmits a television broadcasting signal to set-top-boxes (STB) installed at homes through a tree network of coaxial cables. Recently, in addition of unidirectional transmission from the broadcasting center to the homes, a bi-directional transmission system such as the transmission of information from a home to the broadcasting center and CATV telephone through the broadcasting center has also become widespread.

The satellite broadcasting system refers to a broadcasting system in which a radio wave transmitted from an artificial satellite in a stationary orbit is received by a satellite broadcasting receiving terminal installed in each of homes and displayed on a television receiver.

In such a television broadcasting system, generally, the television receiver is installed at a most easy-to-see site in the home. Namely, the television receiver occupies the first class place. Nevertheless, its other use than image display of TV programs and video display based on the external input signals such as VTR, LD (laser disk) or DVD (digital vide disk) is not sufficient.

The STB or satellite broadcasting receiving terminal is not almost used to the application other than the reception of a television signal.

### SUMMARY OF THE INVENTION

An object of the present invention is to provide an information receiving system for a television receiver which can process the information inputted optionally.

In order to attain the above object, in accordance with the first aspect of the invention, there is provided an information receiving system for a television receiver for receiving a television broadcasting signal including: a terminal device for the television receiver and inputting means for inputting any information, wherein the terminal device comprises:
storage means for storing information inputted from the inputting means;
information reading means for reading the information stored in the storage means when a preset dedicated channel is selected among receiving channels of the receiving device;
video signal output means for adding a synchronizing signal to the information read from the information reading means to create a vide signal; and
switching means for supplying the video signal outputted from the the video signal output means to a television receiver in place of a television broadcasting signal received by the receiving device when the dedicated channel is selected.

In the operation of this information receiving system, when any information is input from an input means by a user, it is stored in the storage means.

Further, when the receiving channel of the receiving device is set at a dedicated channel by the operation by an operation remote controller, the information stored in the storage means is read by the information reading means and a synchronizing signal is added to the read information by a video signal output means to create a video signal.

Then, the switching means is switched in such a manner that the receiving channel of the receiving device is set at the dedicated channel. As a result, the video signal outputted from the video signal output means is supplied to the television receiver in place of a television broadcasting signal received by the receiving device.

Thus, the information inputted optionally by the user is displayed on the television receiver.

In accordance with the first aspect of the invention, several items of information inputted by the user can be easily displayed on the television receiver. Therefore, the television receiver can be used as a message board in a home.

In accordance with the second aspect of the invention, in addition to the first aspect, the receiving device is a receiving terminal for a cable television broadcasting system.

In this configuration, any information supplied to the receiving terminal of the cable television broadcasting system can be displayed on the television receiver.

In accordance with the third aspect of the invention, in addition to the configuration of the first aspect, the receiving device is a receiving terminal in a satellite broadcasting system.

In this configuration, any information supplied to the receiving terminal of the satellite broadcasting system can be displayed on the television receiver.

In accordance with the fourth aspect of the invention, in addition to the configuration of the first aspect, the preset dedicated channel is a vacant channel of receiving channels in the receiving device.

In this configuration, since the vacant channel is used to display any information inputted by the user, the information can be displayed without sacrificing the receiving channel through the television broadcasting signal is received. The same operation as for the conventional television receiver can be also carried with no feeling of wrongness.

In accordance with the fifth aspect of the invention, in addition to the configuration of the first aspect, the input means in a personal digital assistant (PDA).

In this configuration, any information can be inputted to the receiving device by hand-writing and a key from the personal digital assistant.

In accordance with the sixth aspect of the invention, in addition to the configuration of the first aspect, the information reading means reads one by one plural items of information stored in the storage means so that they are successively displayed on a television receiver.

In this configuration, where plural items of information have been inputted from the input means and stored in the storage means, the stored items of information are successively read by the operation of the up/down key attached to e.g. a remote controller and displayed one by one on.

In accordance with the seventh aspect of the invention, in addition to the configuration of the first aspect, the receiving device includes an electronic mail transmitting means, and the information reading means reads the information stored in the storage means in response to an electronic mail transmission command to cause the electronic mail transmitting means to transmit an electronic mail.

In this configuration, where the information stored in the storage means is transmitted as an electronic mail to a destination, in response to an electronic-mail transmitting command from the input means or operation remote controller, the information reading means reads the information stored in the storage means.

The electronic mail transmitting means converts the read information into the electronic mail mode and adds the electronic mail address of the destination to it, and thereafter transmits the electronic mail through an internet network.

In accordance with the seventh aspect, the electronic mail can be easily transmitted in the stand-by state of the receiving device of the television receiver without waiting the set-up of a personal computer. The application area of the television receiver can be enlarged and the electronic mail can be easily used.

In accordance with the eighth aspect of the invention, in addition to the configuration of the first aspect, the receiving device includes an external ouputting means, and
the information reading means reads the information stored in the storage means in response to an external outputting command to cause the external outputting means to make an external output.

In operation of this configuration, where the information stored in the storage means is facsimile-transmitted or printed out, in response to an external outputting command which is inputted from the input means or operation remote controller, the information reading means reads the information stored in the storage means. The external outputting means reads the read information into its external output mode which is outputted to the external output device such as a facsimile or printer.

In accordance with the eighth aspect, the information stored in the storage means by the user can be displayed as a message board on the television receiver, and also outputted to the external output device such as a facsimile or printer. Thus, the application area of the television receiver can be enlarged.

In accordance with the ninth aspect of the invention, in addition to the configuration of the eighth aspect, the external outputting means is an output means for a facsimile.

In this configuration, the information stored in the storage means by the user can be displayed as a message board on the television receiver, and it can be transmitted to a remote position through facsimile transmission.

In accordance with the tenth aspect of the invention, in addition to the configuration of the eighth aspect, the external outputting means is an output means for a printer.

In this configuration, the information stored in the storage means by the user can be displayed as a message board on the television receiver, and it can be saved as a document by its print-out.

The above and other objects and features of the invention will be more apparent from the following description taken in conjunction with the accompanying drawings.

### BRIEF DESCRIPTION OF THE DRAWIGNS

Fig. 1 is a block diagram showing the system configuration an embodiment when the invention is applied to a CATV broadcasting system;
Fig. 2 is a block diagram of an embodiment when the invention is applied to the receiving terminal of a CATV broadcasting system; and
Fig. 3 is a block diagram showing another embodiment of the invention.

### DESCRIPTION OF THE PREFERRED EMBODIMENS

Now referring to the drawings, an explanation will be given of preferred embodiments of the invention.

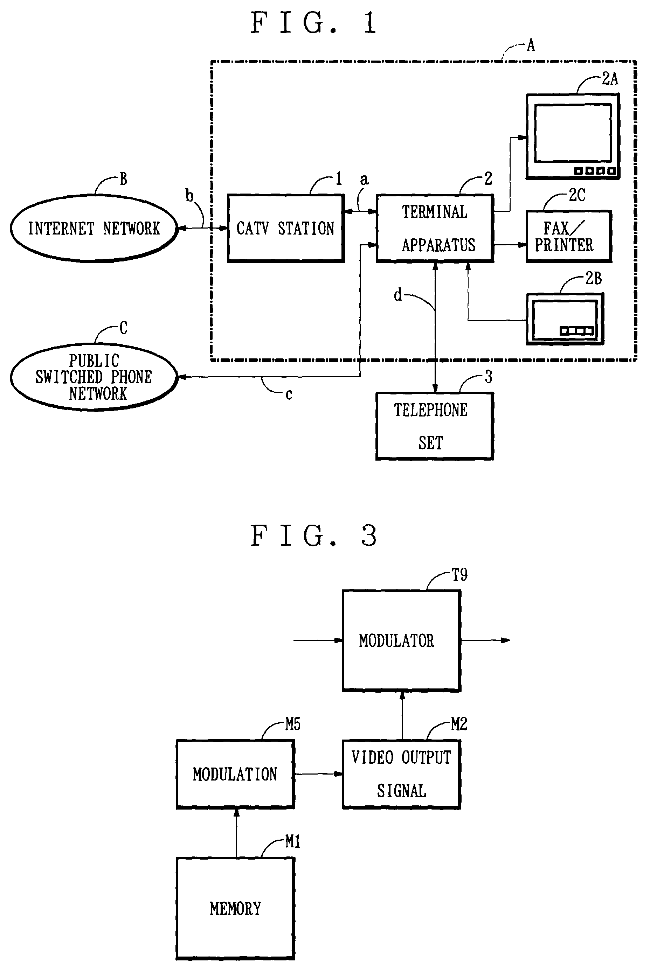

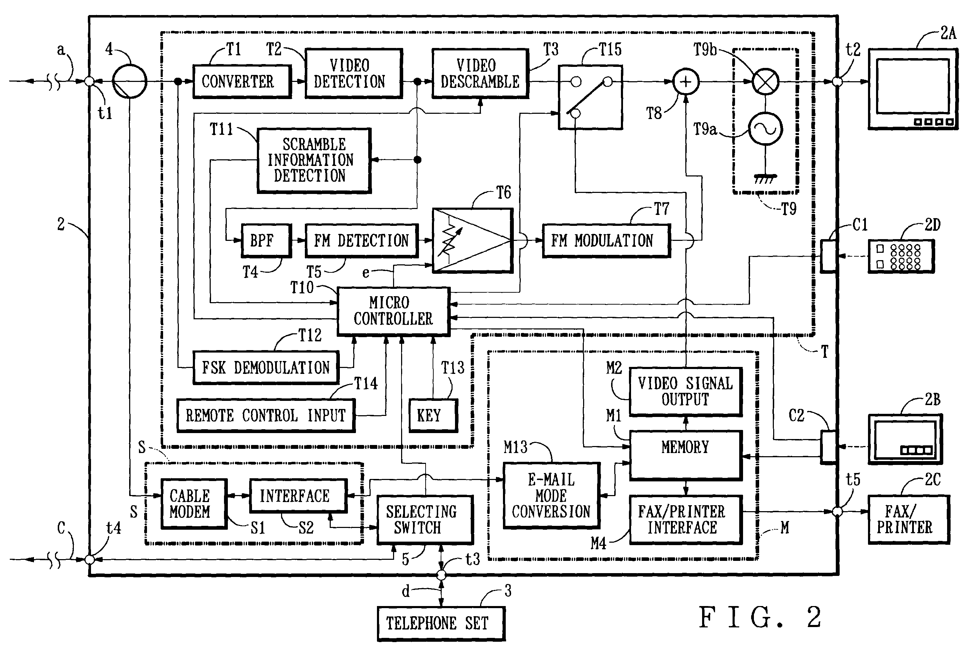

Fig. 1 shows a system configuration an embodiment when the information receiving system for a television receiver according to the invention is applied to a CATV broadcasting system. Fig. 2 is a block diagram of a terminal apparatus 2 which is a television receiver in the CATV system as shown in Fig. 1.

In Fig. 1, a CATV station which distributes TV programs is connected to a general home located within a distribution area through a distribution cable a constructed of a coaxial cable or optical fiber, thereby constituting a CATV broadcasting system A.

The CATV station 1 of the CATV broadcasting system A is always connected to an internet network B through a coaxial cable or optical fiber b.

The terminal apparatus 2 includes a "set top box (STB)" having a communication function (as described later) as well as the tuning function of receiving a TV signal distributed from the CATV station 1. The terminal apparatus 2 receives the TV signal of the program distributed from the CATV station 1 and display a program image on a television receiver 2A. The terminal apparatus 2 also displays the information inputted optionally by a user by means of a personal digital assistance (PDA) 2B on the television receiver 2A, transmits it to the internet network B through the CATV station 1 or produces an output to a Fax/printer 2C.

Further, the terminal apparatus 2 displays the information transmitted from the internet network B through the CATV station on the television receiver 2A.

The terminal apparatus 2 is connected to a public switched phone network C such as NTT though a modular line c and a telephone set 3 through a modular line d

Referring to Fig. 2, an explanation will be given of the structure of the terminal apparatus 2.

As seen from Fig. 2, the terminal device 2 includes a tuner portion T for receiving a TV signal of the program broadcasted from the CATV station 1, an interface portion S for connecting the telephone set 3 to the CATV station 1 and an information processing unit M for processing input information.

The tuner section T of the terminal device 2 includes a converter T1 for frequency-converting a radio-frequency band (RF) signal which is received through a distributor 4 from a connecting terminal t1 to which the broadcasting cable a, is connected, a video detecting circuit T2 for detecting the converted signal, a video de-scramble circuit T3 for releasing the scramble of the detected video signal, a band-pass filter (BPF) T4 for extracting an audio carrier wave from the video signal supplied from the video detecting circuit T2, an FM detecting circuit T5 for FM-detecting the extracted audio carrier wave, an audio amplifying circuit T6 for amplifying the FM-detected audio signal, and a FM modulating circuit T7 for FM-modulating the amplified audio signal.

The tuner section T further includes a synthesizer T8 for synthesizing the video signal with the scramble released by the video de-scramble circuit T3 and the audio signal FM-modulated by the FM modulating circuit T7, and a modulator T9 consisting of a local oscillator T9a and a mixer T9b, for AM-modulating the synthesized signal from the synthesizer T8 into a TV channel signal at a prescribed frequency. In this case, the TV channel signal modulated by the modulator T9 will be sent from an output terminal t2 to a TV receiver 2 connected thereto.

The tuner section T includes a microcomputer T10. The microcomputer T10 is connected to a scramble information detecting circuit T11 for detecting the scramble information from the video signal supplied from the video detecting circuit T2 and an FSK demodulating circuit T12 for demodulating the scramble information from the FSK signal transmitted in outbound from the CATV station 1, a key input circuit T13 and a remote controller input circuit 14.

The micro-controller T10 is connected to the video de-scramble circuit T3, and serves to control releasing of the scramble in the video de-scramble circuit T3 on the basis of the scramble information supplied form the scramble information detecting circuit T11 and FSK demodulating circuit T12.

The micro-controller T10 is connected to the audio amplifying circuit T6. When a telephone signal is supplied from the interface portion S as described later, the micro-controller T10 sends, to the audio amplifying circuit T6, an amplification limiting signal e for previously setting the amplification factor of the audio signal in the audio amplifying circuit T6.

The tuner section T further includes a switch circuit 15 between the vide de-scramble circuit T3 and synthesizer T8. The switch circuit T15 selectively supplies the video signal from the video de-scramble circuit T3 or that from the information processing unit M described later to the synthesizer T8. The switch circuit T15 is connected to the micro-controller T10. When a specific channel described later is selected on the basis of the channel signal supplied from an operation remote controller 2D through a remote receiving unit C1, the micro-controller T10 controls the switch circuit T15 to select the video signal from the information processing section M to be supplied to the synthesizer T8.

The micro-controller T10 is adapted to control the information processing section M so that the information from the PDA 2B is supplied to the interface section S and the Fax/printer 2C connected to the output terminal t5 on the basis of an electric mail (E-mail) transmission command signal inputted from the PDA 2B through the PDA receiving C2.

The interface portion S includes a cable modem S1 connected to the connecting terminal t1 through the distributor 4 and an interface S2 connected to the cable modem S1.

The cable modem S1 enables the bidirectional call via a CATV network in such a manner that a modem signal converted from the telephone signal from a telephone set is inserted in a vacant band of a CATV region.

The interface S2 serves to convert the audio signal from the telephone set into the mode signal which can be modulated by the cable modem S1 and to convert the modem signal modulated by the cable modem S1 into an audio signal for the telephone set.

The interface unit S2 of the interface unit S is connected to a switch circuit 5.

The switching circuit 5 is connected to the telephone set 3 through a modular terminal t3. The switching circuit 5 is connected to the public switched phone network such as NTT through a public switched phone terminal t4.

In accordance with a discriminating signal (described later) supplied from the telephone set 3 connected to the modular terminal t3, the switching circuit 5 switches the modular terminal t3 between the interface S2 and the public switched phone terminal t4 and selectively connects the telephone set 3 to the internet network B via the CATV network or the public switched phone network C (Fig. 1).

The switching circuit 5 is also adapted as follows. When a telephone signal is supplied from the output terminal t1 through the cable modem S1 and interface S2, the interface S2 is connected to the modular terminal t3. When the telephone signal is supplied from the public switched phone terminal t4, the public switched phone terminal t4 is connected to the modular terminal t3.

The information processing section M includes a memory M1 connected to the PDA receiving unit C2. The memory M1 stores the information inputted from the PDA 2B through the PDA receiving unit C2. The information processing section M also includes a video signal output circuit M2 connected to the memory M1. The video signal output circuit M2 adds a synchronizing signal to the information read from the memory M1 to produce a video signal.

The information processing section M further includes an electronic mail mode conversion circuit M3 and a Fax/printer interface M4. The electronic mail mode conversion circuit M3 is connected to the memory M1, and converts the information outputted from the memory M1 into an electronic mail mode to be supplied to the interface S2 of the interface section S. The Fax/printer interface M4 is connected to the memory M1, and converts the information outputted from the memory M1 into a Fax/printer output mode to be supplied to the output terminal t5.

The memory M1 of the information processing section M is connected to the micro-controller T10 in the tuner section T. On the basis of the channel signal received from the operation remote controller 2D or the operation command signal received from the PDA 2B, the micro-controller T10 supplies a command signal to the M1 and controls it so that the information stored in the memory M1 is supplied to the video signal output circuit M2, electronic mail mode conversion circuit M3 or Fax/printer interface M4.

An explanation will be given of the operation of the terminal device 2.

The terminal device 2 is connected to the CATV 1 in such a manner that a connecting terminal t1 is connected to the distributing cable a retracted into a general home.

In the terminal device 2, the tuner section T receives, via the distributor 4, the RF signal transmitted from the CATV station 1 through the transmitting cable a. The tuner section T subjects the RF signal to desired video signal processing and audio signal processing to create a TV channel signal which will be sent to a television receiver 2A from output terminal t2.

At this time, the switch circuit T15 of the tuner section T has been switched into the position of connecting the video de-scramble circuit T3 to the synthesizer T8.

The terminal device 2 has the same function of receiving the TV program broadcast from the CATV station 1 as that of a conventional CATV terminal device.

The terminal device 2 is connected to the telephone set 3 through the modular line d and is connected to the public switched phone terminal t4 through the public switched phone network such as NTT.

When a user wants to originate a call from the telephone set 3 through the internet network, he adds the number of "1" to the head of a telephone number.

Therefore, the switching circuit 5 is switched into the side of connecting the modular terminal t3 to the interface S2. Thus, the calling signal inputted from the telephone set 3 is supplied to the interface S2.

The calling signal supplied to the interface S2 is converted into the modem signal which is supplied to the cable modem S1. In the cable modem, the modem signal is inserted in the vacant band of the RF signal transmitted from the CATV station 1 through the transmitting cable a.

The calling signal inserted in the vacant region of the CATV network is transmitted to the CATV station 1 through the transmitting cable a, and further transmitted to the internet network B connected to the CATV station 1.

In this way, the telephone set 3 is communicated with the called party having an IP address corresponding to the calling signal through the internet network so that the call by the internet telephone can be executed.

When the user wants to originate a call from the telephone set 3 through the public switched phone network, he adds the number of "2" to the head of a telephone number.

Thus, the switching circuit 5 is switched into the side of connecting the modular terminal t3 to the public switched phone terminal t4 so that the telephone set 3 is communicated with the public switched phone network. This permits the speech to be executed through the public switched phone network C.

On the other hand, when a calling signal which calls up the telephone set 3 is supplied from the internet network B through the CATV station 1 (i.e. there is a call from the internet telephone), it is inputted to the interface section S through the distributor. It is demodulated by the cable modem S1 and converted into the telephone signal which is in turn supplied to the switching circuit 5.

When the switching circuit 5 receives the telephone signal from the interface unit S2, it is switched into the side of connecting the interface unit S2 to the modular terminal t3. Thus, the telephone signal is supplied to the telephone set 3.

In this way, the telephone set 3 is communicated with the internet network B so that the speech through internet telephone can be executed.

Further, when the telephone signal is supplied to the public switched phone terminal t4 through the public switched phone network C, the switching circuit 5 is switched into the side of connecting the public switched phone terminal t4 to the modular terminal t3. Thus, the telephone signal is supplied to the telephone set 3.

In this way, the telephone set 3 is communicated with the public switched phone network C so that the call through the public telephone can be executed.

As described above, in either of both cases where the telephone set 3 connected to the terminal device 2 is located on the side of calling party and called party, using the switching by the switching circuit 5, the call by both the internet telephone and public telephone can be executed by a single telephone set 3.

In the call by the internet telephone or public telephone executed as described above, when the telephone signal is supplied to the switching circuit 5 from the telephone set 3, interface S2, or public switched phone terminal t4, a part of the telephone signal is supplied from the switching circuit 5 to the micro-controller T10 of the tuner T.

When the micro-controller T10 receives the telephone signal from the switching circuit 5, it sends an amplification limiting signal e to the audio amplification circuit T6.

Thus, during the call by the internet telephone or public telephone, the amplification factor of the audio signal in the audio amplifying circuit T6 is limited to a prescribed value so that the sound volume from the TV receiver (not shown) is automatically lowered.

The terminal device 2 receives any information inputted by hand-writing and a key from the PDA 2B, e.g. any information such as a message or a mail by a user, and stores it.

Specifically, when the PDA 2B is located in the transmission mode, the information inputted by the user through the PDA 2B is received by the PDA receiving unit C2 by means of infrared rays or wireless/cable, and stored as single screen display information in the memory M1 of the information processing section M.

The information stored in the memory M1 is displayed on the television receiver 2A in such a manner that a channel dedicated to information display (which is generally set at an vacant channel) is selected using the operation remote controller 2D so that the channel signal is transmitted to the terminal device 2.

Specifically, when the channel signal for the channel dedicated to the information display is supplied to the micro-controller T10 of the tuner section T through the remote-control receiving unit C1 from the operation remote controller 2D, the micro-controller T10 issues a command signal to the memory M1 on the basis of the channel signal so that the information read from the memory M1 is sent to the video signal output circuit M2.

The video signal output circuit M2 adds a synchronizing signal to the information read from the memory M1 to create a vide signal which is in turn sent to the switch circuit T15 of the tuner section T.

At this time, on the basis of a switching signal, the switch circuit T15 has been switched into the position of connecting the video signal output circuit M2 to the synthesizer T8 in place of the position of connecting the video scramble circuit T3 to the synthesizer T8. The switching signal is produced from the micro-controller T10 in response to the channel signal of the channel dedicated to information display supplied from the operation remote controller 2D.

Thus, the video signal produced from the video signal output circuit M2, which is supplied to the synthesizer T8 through the switch T15, can be displayed on the television receiver 2A from the output terminal t2 through the modulator T9.

In this way, by displaying the information inputted from the PDA 2B on the television receiver 2A, the television image 2A can be used as a message board in a home.

Now, where plural items of information are stored in the memory M1, they are displayed successively for each screen by an up/down key attached to the operation remote controller 2D.

On the other hand, where the information stored in the memory M1 is to be transmitted as an E-mail, the electronic mail address of a destination is input from the PDA 2B and supplied to the memory M1 through the PDA receiving section C2. In addition, an operation command signal for instructing the transmission of the E-mail is supplied to the micro-controller T10 through the PDA receiving unit C2 from the PDA 2B.

The micro-controller T10 issues a command signal for transmission of the E-mail to the memory M1 on the basis of the operation command signal from the PDA 2B. In response to this command signal, the memory M1 issues the stored information and the E-mail address of a transmission destination inputted from the PDA 2B to the E-mail mode converting circuit M3.

The input information and the E-mail address of the transmission destination are converted into the E-mail mode by the E-mail mode converting circuit M3. They are sent to the CATV station 1 through the interface S2 and cable modem S1 of the interface section S and the distributor 4 from the connecting terminal t1. Further, they are sent to an E-mail terminal device at a transmission destination through the internet network A (Fig. 1) connected to the CATV station 1.

When an E-mail has been transmitted to the E-mail address set at the terminal device 2 through the internet network B and cable station 1, the E-mail is sent to the E-mail mode converting circuit M3 through the interface section S. After released from the E-mailmode, it is supplied to the memory M1 and stored there.

As described above, the E-mail stored in the memory M1 can be viewed by selecting the channel dedicated to information display using the operation remote controller 2D.

Where the information stored in the memory M1 is to be transmitted by facsimile or printed out, the operation command signal for facsimile-transmission or printing-out is issued to the micro-controller T10 through the PDA receiving unit C2 from the PDA 2B.

Thus, the micro-controller T10 issues a command signal for facsimile-transmission or printing-out to the memory M1. In response to the command signal, the memory M1 issues the stored information to the FAX/printer interface M4.

The FAX/printer interface M4 converts the received information into the output mode of the printer or facsimile which is in turn sent to the Fax/printer 2C through the output terminal t5. The Fax/printer 2C executes facsimile transmission or printing-out.

In the above example, where the terminal device is of a type not converting a video signal into a base band, as shown in Fig. 3, a modulation circuit M5 is located between the memory M1 and video output circuit M2 of the memory M. The modulation circuit M5 modulates the frequency carrier at the channel (vacant channel) dedicated to information display using the information read from the memory M1, and supplies the carrier equipped with a synchronizing signal to the modulator T9.

In this case, the switch circuit T15 as shown in Fig. 2 is not required.

In the embodiment described above, the present invention has been applied to the terminal device of a CATV broadcasting system. However, the present invention can also be applied to the satellite broadcasting receiving terminal device in a satellite broadcasting system.

In this case, the configuration of the information processing section for processing the information inputted from the PDA 2B is substantially the same as that of the information processing section M of the terminal device 2 as shown in Fig. 2. However, in order to execute transmission/reception of the E-mail, an interface for this purpose is connected to the internet network though the public switched phone network.

## Claims

1. An information receiving system for a television receiver for receiving a television broadcasting signal including: a terminal device for the television receiver and inputting means for inputting any information, wherein said terminal device comprises:
storage means for storing information inputted from the inputting means;
information reading means for reading the information stored in said storage means when a preset dedicated channel is selected among receiving channels of the receiving device;
video signal output means for adding a synchronizing signal to the information read from the information reading means to create a vide signal; and
switching means for supplying the video signal outputted from the said video signal output means to a television receiver in place of a television broadcasting signal received by the receiving apparatus when said dedicated channel is selected.

2. An information receiving system according to claim 1, wherein said receiving device is a receiving terminal for a cable television broadcasting system.

3. An information receiving system according to claim 1, wherein said receiving device is a receiving terminal in a satellite broadcasting system.

4. An information receiving system according to claim 1, wherein said preset dedicated channel is a vacant channel of receiving channels in said receiving device.

5. An information receiving system according to claim 1, where said input means in a personal digital assistant (PDA).

6. An information receiving system according to claim 1, wherein said information reading means reads one by one plural items of information stored in said storage means so that they are successively displayed on a television receiver.

7. An information receiving system according to claim 1, wherein said receiving device includes an electronic mail transmitting means, and
said information reading means reads the information stored in said storage means in response to an electronic mail transmission command to cause said electronic mail transmitting means to transmit an electronic mail.

8. An information receiving system according to claim 1, wherein said receiving device includes an external ouputting means, and
said information reading means reads the information stored in said storage means in response to an external outputting command to cause said external outputting means to make an external output.

9. An information receiving system according to claim 8, wherein said external outputting means is an output means for a facsimile.

10. An information receiving system according to claim 8, wherein said external outputting means is an output means for a printer.

11. A method for processing information using a receiving device for a television receiver for receiving a television broadcasting signal, comprising the steps of:
inputting any information from information inputting means;
storing information inputted from the inputting means in storage means;
reading the information stored in said storage means by information reading means when a preset dedicated channel is selected among receiving channels for the television receiver;
adding a synchronizing signal to the information read by said information reading means to create a video signal; and
supplying the video signal to the television receiver in place of a television broadcasting signal received by the receiving device when said dedicated channel is selected.

12. A method for processing information according to claim 11, wherein the step of reading the information includes reading one by one plural items of information stored so that they are successively displayed on the television receiver.

13. A method for processing information according to claim 11, further comprising the step of reading the information stored in said storage means in response to an electronic mail transmission command to transmit an electronic mail by an electronic mail transmitting means.

14. A method for processing information according to claim 11, further comprising the step of reading the information stored in said storage means in response to an external outputting command to make an external output by an external outputting means.
